# EUROPEAN PATENT APPLICATION

(11) **EP 4 765 391 A1**
(43) Date of publication of application: **24.06.2026**
(21) Application number: 25222677.4
(22) Date of filing: 11.12.2025
(51) Int. Cl.: H01M 50/209, H01M 50/227, H01M 50/262, H01M 50/486, H01M 50/242

(54) **BATTERY MODULE**

(30) Priority: 19.12.2024 KR 20240191452
(71) Applicant: SAMSUNG SDI CO., LTD., Yongin-si, Gyeonggi-do 17084 (KR)
(72) Inventor: Lee, Hyunsoo, 17084 Yongin-si, Gyeonggi-do (KR)
(74) Representative: Meissner Bolte Partnerschaft mbB

(57) **Abstract**

A battery module (100) includes a plurality of battery cells (10) arranged in parallel with each other in a first direction (x), with each of the battery cells (10) including a case (15) accommodating an electrode assembly (210). An insulating tape (120) wraps the case (15) of each of the plurality of battery cells (10), and a plurality of holes (121) are formed in each of the insulating tapes (120). The holes (121) are formed in a portion of each of the insulating tapes (120) that wraps one or more larger surfaces among side surfaces of each of the battery cells (10), and an adhesive (130) is provided inside the holes (121).

## Description

### BACKGROUND

### 1. Field

The present invention relates to a battery module.

### 2. Description of the Related Art

Unlike primary batteries that can be recharged, secondary batteries are capable of being recharged. Low-capacity secondary batteries are used in small portable electronic devices, such as smartphones, feature phones, laptop computers, digital cameras, and camcorders. Large-capacity secondary batteries are widely used as motor driving power supply and power storage batteries for hybrid vehicles, electric vehicles, and the like. Such a secondary battery includes an electrode assembly including a positive electrode and a negative electrode, a case accommodating the electrode assembly, and an electrode terminal connected to the electrode assembly.

The information described in this section is intended to improve understanding of the background of the disclosure and therefore may include information that does not constitute related or prior art.

### SUMMARY

Provided is a battery module with improved fixing strength between adjacent cells.

Additional aspects will be set forth in part in the description which follows and, in part, will be apparent from the description, or may be learned by practice of the presented embodiments of the disclosure.

According to the present invention, a battery module includes a plurality of battery cells arranged in parallel to each other in a first direction, with each of the battery cells including a case accommodating an electrode assembly, an insulating tape wrapping the case of each of the battery cells, and a plurality of holes formed in each of the insulating tapes, wherein the holes are formed on a portion of each of the insulating tapes that wraps one or more larger surfaces among side surfaces of each of the battery cells, and an adhesive is provided inside the plurality of holes.

The holes in the insulating tape of each of battery cells may be arranged to correspond to the holes formed in the insulating tape wrapping an adjacent battery cell.

Each of the insulating tapes may include an area where a surface of the case of the battery cell wrapped by the insulating tape is exposed.

The area where the surface of the case of each of the battery cells is exposed may provide a space between adjacent battery cells of the plurality of battery cells.

The spaces between the adjacent battery cells may be filled with the adhesive.

A number of the holes of the plurality of holes located on a left portion and a right portion of the one or more larger surfaces among the side surfaces of each of the battery cells may be greater than a number of the holes of the plurality of holes located in a center portion of the one or more larger surfaces.

The holes may be located only on the left portion and the right portion of the one or more larger surfaces among the side surfaces of each of the battery cells.

For each of the insulating tapes, a total sum of areas of the holes may be 20% to 50% of an area of the one or more larger surfaces among the side surfaces of the battery cell wrapped in the insulating tape.

A shape of each of the holes may include at least one of a circle, a polygon with rounded corners, and a slot.

Cases of two adjacent battery cells of the plurality of battery cells may be directly bonded to each other by the adhesive.

According to another aspect of the present invention, a battery module includes a plurality of battery cells arranged in parallel with each other in a first direction, with each of the battery cells including a case accommodating an electrode assembly, an insulating tape wrapping the case of each of the battery cells, and a plurality of holes formed in each of the insulating tapes, wherein the holes in each of the insulating tapes are arranged to correspond to the holes formed in an adjacent insulating tape, and an adhesive is provided inside the holes.

Each of the insulating tapes may include an area where a surface of the case of the battery cell wrapped by the insulating tape is exposed.

The area where the surface of the case of each of the battery cells is exposed may provide a space between adjacent battery cells of the plurality of battery cells.

The spaces between adjacent battery cells may be filled with the adhesive.

The holes may be formed in a portion of each of the insulating tapes that wraps one or more larger surfaces among side surfaces of each of the battery cells.

A number of holes of the plurality of holes located on a left portion and a right portion of the one or more larger surfaces among the side surfaces of each of the battery cells may be greater than a number of the holes of the plurality of holes located on a center portion of the one or more larger surfaces.

The holes may be located only on the left portion and the right portion of the one or more larger surfaces among the side surfaces of each of the battery cells.

For each of the insulating tapes, a total sum of areas of the holes may be 20% to 50% of an area of the one or more larger surfaces among the side surfaces of the battery cells wrapped in the insulating tape.

A shape of each of the holes may include at least one of a circle, a polygon with rounded corners, and a slot.

In an embodiment, cases of two adjacent battery cells of the plurality of battery cells may be directly bonded to each other by the adhesive.

### BRIEF DESCRIPTION OF THE DRAWINGS

The above and other aspects, features, and advantages of certain embodiments of the present invention will be more apparent from the following description taken in conjunction with the accompanying drawings in which:
FIG. 1 is a perspective view of a battery module according to an embodiment of the present invention;
FIG. 2 is a perspective view a battery cell according to an embodiment of the present invention;
FIG. 3 is a cross-sectional view taken along line III-III' of FIG. 2;
FIG. 4 is a perspective view of a battery module that includes a battery cell including a case wrapped in an insulating tape according to an embodiment of the present invention;
FIG. 5 is a cross-sectional view of an example in which an adhesive is applied to a hole formed on an insulating tape according to an embodiment of the present invention;
FIG. 6 are cross-sectional views showing various arrangements of a plurality of holes formed on an insulating tape according to an embodiment of the present invention; and
FIGS. 7A, 7B, and 7C are cross-sectional views showing various shapes of a plurality of holes formed on an insulating tape according to an embodiment of the present invention.

### DETAILED DESCRIPTION

Hereinafter, embodiments of the present invention will be described in detail with reference to the accompanying drawings. Terms or words used in the present specification and claims should not be interpreted as being limited to their usual or dictionary meanings but should be interpreted as meanings and concepts that conform to the technical scope of the present invention, based on the principle that an inventor may appropriately define the concepts of the terms in order to explain his or her own invention in the best way. Accordingly, embodiments described in the present specification and configurations illustrated in the drawings are merely some of most preferable embodiments of the present invention and do not represent all of the technical scope of the present invention. Thus, it should be understood that there may be various equivalents and modifications that may replace the embodiments at the time of filing the present application.

When used in the present specification, the terms "comprise/include" and/or "comprising/including" specify the presence of stated features, numbers, steps, operations, members, elements, and/or groups thereof, but do not preclude the presence or addition of one or more other features, numbers, operations, members, elements, and/or groups thereof.

In addition, to help understanding of the present invention, the attached drawings are not illustrated according to an actual scale, and dimensions of some components may be exaggerated. Also, same reference numbers may be assigned to same components in different embodiments.

Although the terms first, second, etc. are used to describe various components, these components are not limited by such terms. These terms are used only to distinguish one component from another, and unless otherwise specifically stated, it is to be understood that a first component may also be a second component.

Throughout the specification, unless otherwise specifically stated, each element may be singular or plural.

A configuration being arranged "above (or under)" a component or "on (or below)" a component may indicate not only that the configuration is in contact with a top surface (or a bottom surface) of the component, but also that another configuration may be arranged between the component and the configuration arranged on (or below) the component.

When it is described that a component is "connected", "coupled", or "accessed" to another component, the components may be directly connected or accessed to each other, but it should also be understood that another component may be "arranged" between the components or that each component may be "connected", "coupled", or "accessed" through another component. Also, when a portion is electrically coupled to another portion, the portions may be directly coupled to each other or the portions may be coupled to each other with another element therebetween.

Hereinafter, embodiments will be described in detail with reference to the accompanying drawings, and in the following description with reference to the drawings, like reference numerals refer to like elements.

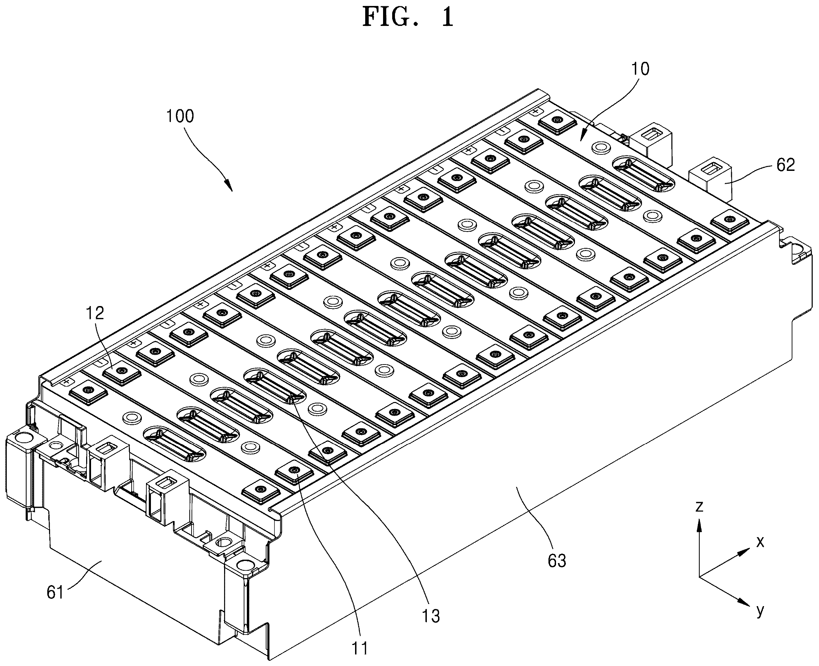

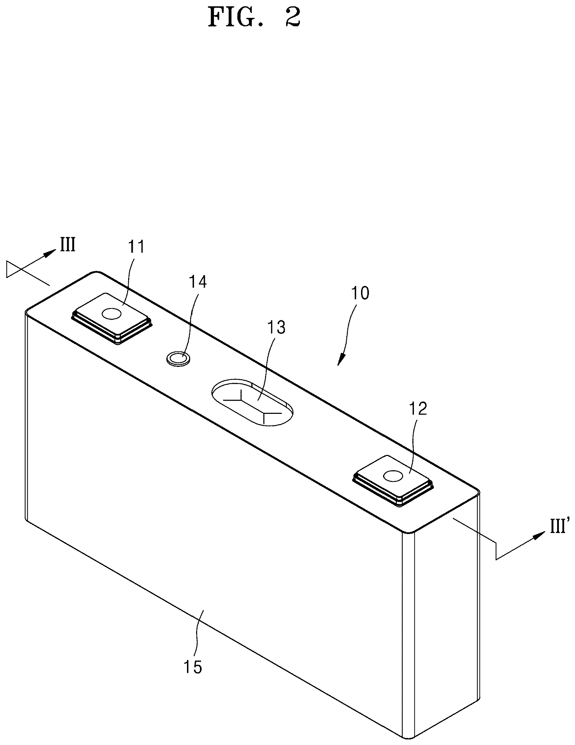

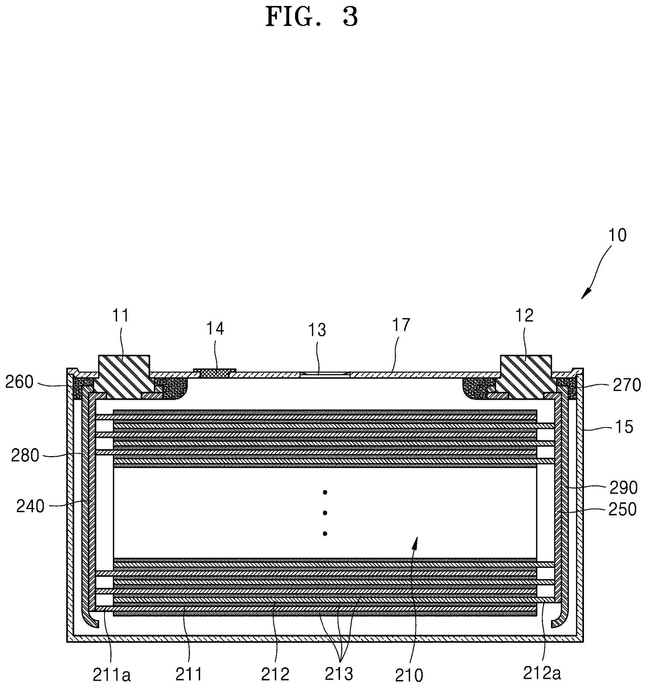

FIG. 1 is a perspective view of an example of a battery module 100 according to an embodiment of the present invention, FIG. 2 is a perspective view of an example of a battery cell 10 according to an embodiment of the present invention, and FIG. 3 is a schematic cross-sectional view taken along line III-III' of FIG. 2.

Referring to FIGS. 1 to 3, a battery module 100 according to an embodiment of the present invention may include a plurality of battery cells 10 arranged in parallel with each other in a first direction x. Each of the battery cells 10 may include case 15 accommodating an electrode assembly 210. More specifically, each battery cell 10 may include the case 15, with the electrode assembly 210 and an electrolyte accommodated in the case 15. The electrode assembly 210 and the electrolyte react electrochemically to generate energy.

One side of the battery cell 10 may be provided with terminal portions that are electrically connected to a connection tab, a vent 13 forming a passage for discharging a gas generated inside the battery cell 10, and an electrolyte injection hole 14 for injecting the electrolyte into the case 15. The terminal portions of the battery cell 10 may include a first terminal 11 and a second terminal 12 having different polarities. For example, when the first terminal 11 is a positive terminal, the second terminal 12 may be a negative terminal, and conversely, when the first terminal 11 is a negative terminal, the second terminal 12 may be a positive terminal. In other words, the first terminal 11 and the second terminal 12 have different electrical polarities and are not limited to a specific polarity.

The terminal portions of the adjacent battery cells 10 may be electrically connected to each other in series and/or in parallel by using the connection tab. For example, the first terminal 11 of one battery cell 10 may be electrically connected to the second terminal 12 of another adjacent battery cell 10 through the connection tab, and the second terminal 12 of the one battery cell 10 may be electrically connected to the first terminal 11 of another adjacent battery cell 10 through another connection tab.

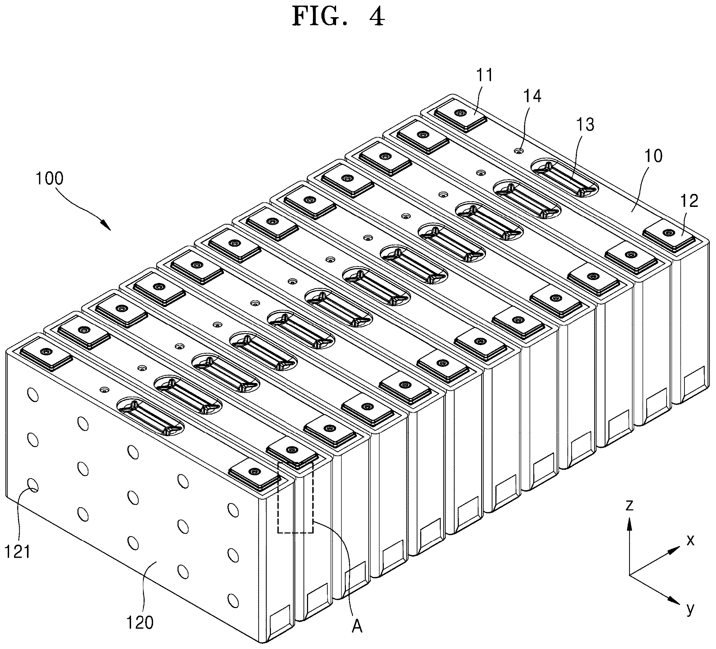

An example of a connection of battery cells 10 is illustrated in FIGS. 1 and 4, but the connection is not limited to such a structure and various connection structures may be adopted and used as needed. The number and arrangement of battery cells 10 are not limited to structures illustrated in FIGS. 1 and 4 and may be changed as needed.

The plurality of battery cells 10 may be arranged in one direction (e.g., the first direction x) such that wide surfaces of the battery cells 10 face each other, and the plurality of battery cells 10 arranged as such may be accommodated in a housing.

The housing may include a pair of end plates 61 and 62 facing the largest surfaces of the battery cell 10, and a side plate 63 and a bottom plate (not shown), which connect the pair of end plates 61 and 62. The side plate 63 may support a side surface of the battery cell 10, and the bottom plate (not shown) may support a bottom surface of the battery cell 10. The pair of end plates 61 and 62, the side plate 63, and the bottom plate (not shown) may be connected to each other by using a connecting structure such as a bolt.

The battery cell 10 according to an embodiment of the present invention may include at least one electrode assembly 210 and the case 15 in which the electrode assembly 210 is accommodated. The electrode assembly 210 may include first electrode plate sheets 211 and second electrode plate sheets 212, with each of the first electrode plates 211 being alternately stacked on one of the second electrode plates 212 and with a separator 213 between each first electrode plate 211 and second electrode plate 212.

The first electrode plates 211 and the second electrode plates 212 of the battery cell 10 may have different polarities. For example, when the first electrode plates 211 are positive, the second electrode plates 212 may be negative, and conversely, when the first electrode plates 211 are negative, the second electrode plates 212 may be positive. In other words, the first electrode plates 211 and the second electrode plates 212 have different electrical polarities and are not limited to a specific polarity.

An example in which the battery cell 10 according to the present embodiment is an angular lithium ion battery cell 10 will be described.

Each of the first electrode plates 211 and the second electrode plates 212 may each include a coated portion where an active material is applied to a current collector including a thin metal foil. Each of the plates 211 and 212 may also include a first uncoated portion 211a and a second uncoated portion 212a where the active material is not provided.

The electrode assembly 210 may include a structure in which the first electrode plate sheets 211 and the second electrode plate sheets 212 are alternately stacked with the separator 213 between each pair of the first electrode plate 211 and the second electrode plate 212. However, the present invention is not limited thereto, and a first electrode plate 211 and a second electrode plate 212 may be wound after arranging the separator 213 that is an insulator between the first electrode plate 211 and the second electrode plate 212.

The case 15 may form an appearance of the battery cell 10 and may include a conductive metal such as aluminum, an aluminum alloy, or nickel-plated steel. The case 15 provides a space in which the electrode assembly 210 is accommodated.

The battery cell 10 may include a cap plate 17 covering an opening of the case 15, and the case 15 and the cap plate 17 may include a conductive material. Here, the first terminal 11 and the second terminal 12 electrically connected to the first electrode plate 211 or the second electrode plate 212 may extend through the cap plate 17 and protrude outward from the cap plate 17. Outer surfaces of upper pillars of the first terminal 11 and the second terminal 12 protruding outside the cap plate 17 may be threaded and fixed to the cap plate 17 by using a nut. However, the present invention is not limited to such a configuration, and the first terminal 11 and the second terminal 12 may include rivet structures to be riveted together. In other embodiments, the first and second terminals 11 and 12 may be welded to the cap plate 17.

The cap plate 17 may include a thin plate and may be coupled to the case 15 to cover the opening. The electrolyte injection hole 14 with a sealing plug may be provided in the cap plate 17, and the vent 13 including a notch may be provided in the cap plate 17.

The first terminal 11 and the second terminal 12 may be electrically connected to the current collector including a first current collector 240 and a second current collector 250, which are welded to the first uncoated portion 211a of the first electrode plate 211 and the second uncoated portion 212a of the second electrode plate 212. For example, the first terminal 11 and the second terminal 12 may be welded to the first current collector 240 and the second current collector 250, respectively. However, the present invention is not limited to such a configuration, and the first terminal 11 and the second terminal 12, and the first current collector 240 and the second current collector 250 may be integrally coupled to each other.

An insulating member may be provided between the electrode assembly 210 and the cap plate 17. The insulating member may include a first lower insulating member 260 and a second lower insulating member 270, with each of the first lower insulating member 260 and the second lower insulating member 270 being provided between the electrode assembly 210 and the cap plate 17.

According to the present embodiment, an end of a separation member that may face one side surface of the electrode assembly 210 may be provided between the insulating member and the first terminal 11 and the second terminal 12. The separation member may include a first separation member 280 and a second separation member 290. Accordingly, ends of the first separation member 280 and the second separation member 290, which may face side surfaces of the electrode assembly 210, may be provided between the first lower insulating member 260 and the first terminal 11 and between the second lower insulating member 270 and the second terminal 12. Thus, the first terminal 11 and the second terminal 12 welded to the first current collector 240 and the second current collector 250 may be coupled to the first lower insulating member 260 and the second lower insulating member 270 and to ends of the first separation member 280 and the second separation member 290.

FIG. 4 is a perspective view of an example of a battery module 100 that includes a battery cell 10 including a case 15 wrapped in an insulating tape 120 according to an embodiment of the present invention. Referring to FIG. 4, the battery module 100 according to an embodiment of the present invention includes the plurality of battery cells 10 arranged in parallel with each other in the first direction x, and each of the plurality of battery cells 10 includes the case 15 wrapped in an insulating tape 120.

The insulating tape 120 is attached to wrap an outer surface of the case 15 of each battery cell 10 to electrically insulate between the plurality of battery cells 10 in the battery module 100. According to an embodiment of the present invention, the insulating tape 120 may wrap the entire outer surface of the case 15, i.e., the side surfaces and the bottom surface, except for the cap plate 17 of the battery cell 10. In another embodiment, the insulating tape 120 may wrap a portion of the cap plate 17 and the side surfaces and bottom surface of the case 15, except for the first and second terminals 11 and 12 protruding from the cap plate 17, the vent 13, and the electrolyte injection hole 14.

The insulating tape 120 is not limited in the present invention as long as the insulating tape 120 includes a material for insulating between the battery cells 10.

According to an embodiment of the present invention, the insulating tape 120 wrapping the case 15 of each of the plurality of battery cells 10 may include a plurality of holes 121. The holes 121 may be provided in a portion of the insulating tape 120 wrapping the largest surface among the side surfaces of each of the battery cells 10. The plurality of holes 121 provided in the insulating tape 120 allow direct bonding between the cases 15 of the plurality of battery cells 10 by an adhesive 130.

The plurality of holes 121 may be provided in the portion of the insulating tape 120 wrapping the largest surface among the side surfaces of each of the battery cells 10. That is, the holes 121 may be provided in all of portions of the insulating tape 120 wrapping two side surfaces among the side surfaces of the battery cells 10. For the battery cells 10 located at opposite ends of an array of the plurality of battery cells 10 that are close to the end plate 61 among the battery cells 10 configuring the battery module 100, the holes 121 may not be provided on the largest surface of the battery cell 10 in a direction of the end plate 61. But the present invention is not limited to such a configuration.

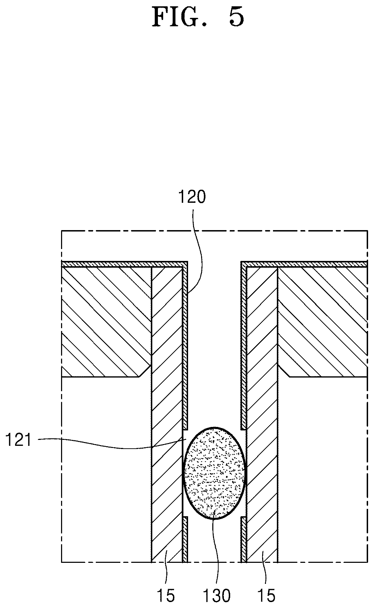

FIG. 5 is a cross-sectional view of an example in which an adhesive 130 is provided in a hole formed on an insulating tape 120 according to an embodiment of the present invention, wherein an area A of FIG. 4 is enlarged. Referring to FIG. 5, according to an embodiment of the present invention, the adhesive 130 is provided inside the holes 121 formed on the insulating tape 120. The adhesive 130 may be an adhesive resin composition. But the present invention is not limited as long as the adhesive 130 can form adhesion between the battery cells 10.

To configure a battery module, a viscous adhesive such as double-sided adhesive tape may be provided on opposite surfaces of cases of battery cells to bond the battery cells together. In other battery modules, an adhesive that bonds through a chemical reaction may be applied to fix the battery cells to each other. However, due to an external impact or the like, adhesive strength between an insulating tape wrapping the battery cell and a surface of a can that is the case of the battery cell may be reduced, causing a slip phenomenon. Thus, fixing strength between the battery cells of the battery module may be reduced.

According to an embodiment of the present invention, the adhesive 130 may be provided inside the holes 121 formed on the insulating tape 120. Thus, the cases 15 of the adjacent battery cells 10 may be directly bonded to each other by the adhesive 130. Accordingly, it is possible to prevent fixing strength between the battery cells 10 from being reduced due to slipping between the insulating tape 120 wrapping the battery cell 10 and a surface of a can that is the case 15 of the battery cell 10.

According to an embodiment of the present invention, the holes 121 may be arranged to correspond to the holes 121 formed in the insulating tape 120 wrapping the adjacent battery cell 10. The insulating tape 120 may include an area where the surface of the case 15 of each of the plurality of battery cells 10 is exposed by the holes 121.

The holes 121 may arranged to correspond to the holes 121 formed in the insulating tape 120 wrapping the adjacent battery cell 10, and the areas where the surfaces of the cases 15 of the adjacent battery cells 10 are exposed may also correspond to and face each other by the plurality of holes 121 at the same positions. Accordingly, the adhesive 130 is applied inside the holes 121, and adhesive 130 may also be applied to the area(s) where the surface of the case 15 of each of the adjacent battery cells 10 is exposed.

The adhesive 130 may therefore be applied directly between the cases 15 of the adjacent battery cells 10 to provide adhesive strength, thereby effectively and stably fixing the plurality of battery cells 10 of the battery module 100. Accordingly, even if the adhesive strength between the insulating tape 120 and the surface of the can that is the case 15 of the battery cell 10 is reduced and aslipping occurs, bonding between the battery cells 10 may be stably maintained.

According to an embodiment of the present invention, the area(s) where the surface of the case 15 of each of the battery cells 10 is exposed by the holes 121 may provide a space between the battery cells 10. In some embodiments, the adhesive 130 may be filled in the space between the battery cells 10.

The adhesive 130 may be applied to fill the space between battery cells 10, with the space being formed by the area where the surface of the case 15 of each of the plurality of battery cells 10 is exposed by the holes 121. But the present present invention is not limited in this regard. In addition, the adhesive 130 may move outside the space between the battery cells 10 and also be applied to the surrounding insulating tape 120 outside the holes 121 after filling the space between the battery cells 10. The adhesive 130 may thereby directly apply adhesive strength between the adjacent insulating tapes 120. Accordingly, the cases 15 of the battery cells 10 may be directly bonded to each other while the adhesive strength is directly applied on the insulating tape 120, thereby further improving the bonding between the battery cells 10.

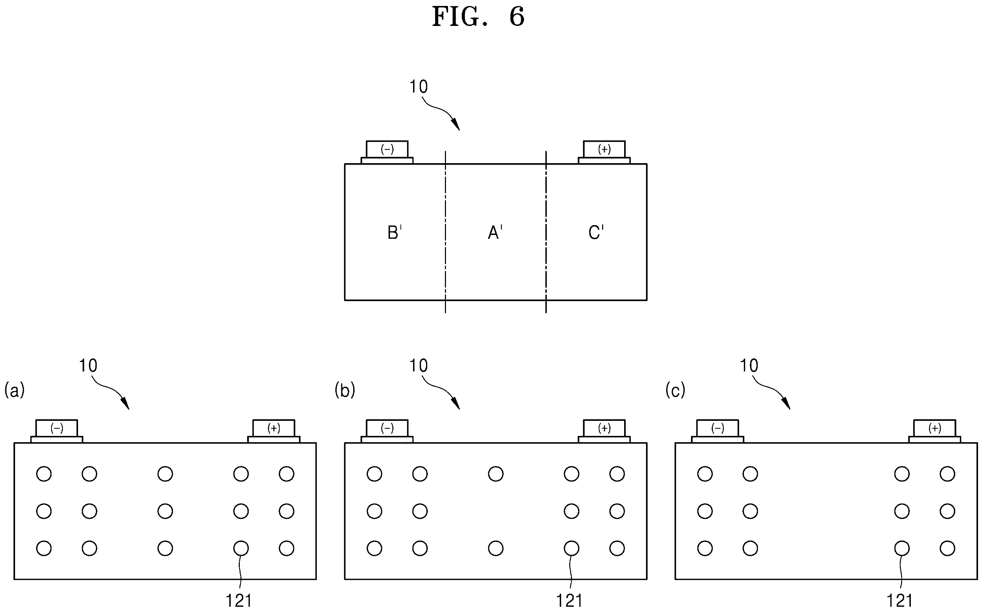

FIG. 6 are cross-sectional views showing various arrangements of a plurality of holes formed on an insulating tape 120 according to an embodiment of the present invention.

A battery module may experience swelling in a center portion of a battery cell due to an increase in a temperature inside the battery cell or an increase in pressure inside the battery cell when a gas generated by a chemical reaction. Accordingly,, it may be appropriate to bond the battery cells such that there is some space for the center portions of the battery cells to swell.

FIG. 6 illustrates examples of a center portion A', a left portion B', and a right portion C' of the largest surface among side surfaces of the battery cell 10. But the positions and/or areas of the center portion A', the left portion B', and the right portion C' are not limited to those shown in FIG. 6.

Referring to FIG. 6, among the holes 121 formed in the insulating tape 120 according to an embodiment of the present invention, the number of the holes 121 located on the left portion B' and the right portion C' of the largest surface among the side surfaces of the battery cell 10 may be greater than the number of holes 121 located on the center portion A'. Considering that the center portion A' of the battery cell 10 may swell, it may be suitable to form the battery module 100 in which the number of the holes 121 located on the left portion B' and the right portion C' is greater than that located on the center portion A' of the largest surface among the side surfaces of the battery cell 10. Although not limited thereto, in one embodiment of the present invention, the holes 121 formed on the insulating tape 120 may be provided only in the left portion B' and the right portion C' of the largest surface among the side surfaces of the battery cell 10. According to another embodiment of the present invention, the holes 121 formed in the insulating tape 120 may be such that the sum of the areas of the holes 121 located on the left portion B' and the right portion C' of the largest surface among the side surfaces of the battery cell 10 is 80% or more of the total area of the plurality of holes 121. In still further embodiments, the holes 121 formed in the insulating tape 120 may be provided in same numbers or same total areas on the left portion B' and the right portion C' of the largest surface among the side surfaces of the battery cell 10 to ensure uniform bonding strength between the battery cells 10.

Although the present invention is not limited in this regard, the holes 121 may have same sizes or may have different sizes in consideration of the total sum of the areas of the holes 121.

The total sum of the areas of the plurality of holes 121 may be 20% to 60% or 20% to 50% of the area of the largest surface among the side surfaces of the battery cell 10 wrapped by the insulating tape 120 in which the plurality of holes 121 are formed. Although not limited thereto, when the total sum of the areas of the plurality of holes 121 is less than 20% of the area of the largest surface among the side surfaces of the battery cell 10, the amount of an adhesive applied inside the hole 121 may be reduced, and, thus, sufficient adhesive strength may not be applied to bond the battery cells 10 to each other. Also, when the total sum of the areas of the plurality of holes 121 is more than 60% of the area of the largest surface among the side surfaces of the battery cell 10, as the area of the holes 121 increases, the amount of an adhesive 130 applied inside the holes 121 increases. This may reduce process cost economy, and an insulating portion of the insulating tape 120 may decrease, which may reduce insulative performance.

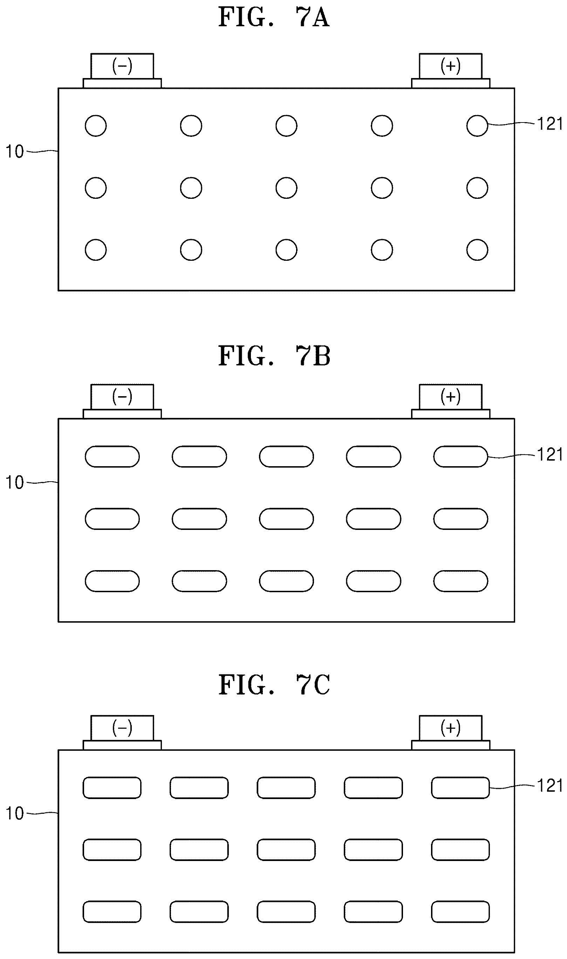

FIG. 7 are cross-sectional views showing various shapes of a plurality of holes formed in an insulating tape 120 according to an embodiment of the present invention. Referring to FIG. 7, the shapes of the holes 121 formed in the insulating member according to an embodiment of the present invention may not include angular corners to prevent the insulating tape 120 from being torn when detached from a release paper during a process of attaching the insulating tape 120 to an outer surface of the case 15 of the battery cell 10. In some examples, the shapes of the holes 121 may be at least one of a circle, a polygon with rounded corners, and a slot. But the present invention is not limited to such shapes.

According to an embodiment, a battery module 100 of the disclosure may have improved fixing strength between adjacent cells.
However, effects that are obtained through the disclosure are not limited to the effects described above, and other technical effects that not mentioned will be clearly understood by one of ordinary skill in the art from the description of the present invention.

## Claims

1. A battery module (100) comprising:
a plurality of battery cells (10) arranged in parallel to each other in a first direction (x), each of the battery cells (10) including a case (15) accommodating an electrode assembly (210);
an insulating tape (120) wrapping the case (15) of each of the battery cells (10); and
a plurality of holes (121) formed in each of the insulating tapes (120),
wherein the holes (121) are formed on a portion of each of the insulating tapes (120) that wraps one or more larger surfaces among side surfaces of each of the battery cells (10), and
an adhesive (130) is provided inside the plurality of holes (121).

2. The battery module (100) according to claim 1, wherein the holes (121) in the insulating tape (120) of each of the battery cells (10) are arranged to correspond to the holes (121) formed in the insulating tape (120) wrapping an adjacent battery cell (10).

3. The battery module (100) according to claim 2, wherein each of the insulating tapes (120) comprises an area where a surface of the case (15) of the battery cell (10) wrapped by the insulating tape (120) is exposed.

4. The battery module (100) according to claim 3, wherein the area where the surface of the case (15) of each of the battery cells (10) is exposed provides a space between adjacent battery cells (10) of the plurality of battery cells (10).

5. The battery module (100) according to claim 4, wherein the spaces between the adjacent battery cells (10) are filled with the adhesive (130).

6. The battery module (100) according to any one of the preceding claims, wherein a number of holes (121) of the plurality of holes (121) located on a left portion (B') and a right portion (C') of the one or more larger surfaces among the side surfaces of each of the battery cells (10) is greater than a number of holes (121) of the plurality of holes (121) located in a center portion (A') of the one or more larger surfaces.

7. The battery module (100) according to claim 6, wherein the holes (121) are located only on the left portion (B') and the right portion (C') of the one or more larger surfaces among the side surfaces of each of the battery cells (10).

8. The battery module (100) according to any one of the preceding claims, wherein, for each of the insulating tapes (120), a total sum of areas of the holes (121) is 20% to 50% of an area of the one or more larger surfaces among the side surfaces of the battery cell (10) wrapped in the insulating tape (120).

9. A battery module (100) comprising:
a plurality of battery cells (10) arranged in parallel to each other in a first direction (x), with each of the battery cells (10) including a case (15) accommodating an electrode assembly (210);
an insulating tape (120) wrapping the case (15) of each of the battery cells (10); and
a plurality of holes (121) formed in each of the insulating tapes (120),
wherein the holes (121) in each of the insulating tapes (120) are arranged to correspond to the holes (121) formed in an adjacent insulating tape (120), and
an adhesive (130) is provided inside the holes (121).

10. The battery module (100) according to claim 9, wherein each of the insulating tapes (120) comprises an area where a surface of the case (15) of the battery cell (10) wrapped by the insulating tape (120) is exposed.

11. The battery module (100) according to claim 10, wherein the area where the surface of the case (15) of each of the battery cells (10) is exposed provides a space between adjacent battery cells (10) of the plurality of battery cells (10).

12. The battery module (100) according to claim 11, wherein the spaces between adjacent battery cells (10) are filled with the adhesive (130).

13. The battery module (100) according to any one of claims 9 to 12, wherein the holes (121) are formed in a portion of each of the insulating tapes (120) that wraps one or more larger surfaces among side surfaces of each of the battery cells (10).

14. The battery module (100) according to any one of claims 9 to 13, wherein a number of holes (121) of the plurality of holes (121) located on a left portion (B') and a right portion (C') of the one or more larger surfaces among the side surfaces of each of the battery cells (10) is greater than a number of holes (121) of the plurality of holes (121) located on a center portion (A') of the one or more larger surfaces.

15. The battery module (100) according to any one of claims 9 to 15, wherein, for each of the insulating tapes (120), a total sum of areas of the holes (121) is 20% to 50% of an area of the one or more larger surfaces among the side surfaces of the battery cells (10) wrapped in the insulating tape (120).
